# EUROPEAN PATENT APPLICATION

(11) **EP 2 904 892 A1**
(43) Date of publication of application: **12.08.2015**
(21) Application number: 15153898.0
(22) Date of filing: 05.02.2015
(51) Int. Cl.: A01C 15/00, A01C 23/00, C02F 1/52, C05B 7/00, C05B 9/00, C05F 3/00, C05F 7/00, B01D 9/00, C02F 11/00, C02F 1/20, C02F 1/58, C02F 1/00, C02F 101/10, C02F 101/16, C01B 25/45

(54) **Method and system for extracting at least a part of the phosphorous and/or nitrogen content of slurry and use of a mobile slurry distribution system as a crystallisation container**

(30) Priority: 11.02.2014 DK 201470068
(71) Applicant: Toft, Morten, 6600 Vejen (DK)
(72) Inventor: Toft, Morten, 6600 Vejen (DK)
(74) Representative: Olesen, Birthe Bjerregaard

(57) **Abstract**

A system and a method for extracting at least a part of the phosphorous content of a slurry, such as manure, wastewater and/or sludge, and recovering phosphorous and optionally nitrogen from the slurry by precipitating it as ammonium magnesium phosphate (NH₄MgPO₄) is disclosed. The method comprises transferring the slurry to a crystallisation container, adding a magnesium source, such as a magnesium salt, e.g. MgCl₂, MgSO₄ and/or magnesium oxide (MgO) and optionally an ammonium source, such as NH₄Cl and/or NH₄NO₃ or anhydrous ammonia, in surplus in relation to the stoichiometric amount necessary for precipitating the phosphorous as ammonium magnesium phosphate (NH₄MgPO₄) to the crystallisation vessel and/or an inlet there-of. Then ammonium magnesium phosphate (NH₄MgPO₄) is precipitated on the inner surface of the vessel and/or as particles in the crystallisation container, and a phosphorous reduced slurry fraction is extracted. Struvite precipitate is recovered by extracting the precipitated ammonium magnesium phosphate from the crystallisation container by re-dissolving the precipitate in an acidic aqueous solution or by suspending precipitated struvite in an aqueous phase.

## Description

### Field of the Invention

The present invention relates to a method for extracting at least a part of the phosphorous content of slurry, such as manure, wastewater and/or sludge, and recovering the phosphorous and optionally nitrogen content from the slurry by precipitating it as ammonium magnesium phosphate (NH₄MgPO₄).

The present invention also relates to a system for extracting at least a part of the phosphorous content of slurry, such as manure, wastewater and/or sludge, and recovering the phosphorous and optionally nitrogen content from the slurry by precipitating it as ammonium magnesium phosphate (NH₄MgPO₄).

In addition, the present invention relates to the use of a mobile slurry tanker as a crystallisation container in a system or a method according to the present invention.

### Background of the Invention

Animal husbandry has a very clear tendency to form clusters. It is widespread throughout Europe and USA that animal husbandry, such as pigs and cattle or poultry, are bread and kept in the certain regions/areas. This phenomenon leads to a pronounced over population of animals in certain regions and thus leads to widespread eutrophication and poor utilisation of the nutrients in the animal slurry in those areas.

Since the soils in those areas cannot sustain the high levels of slurry application, the only answer to the problem is to export the slurry nutrients from the intensively managed regions to regions with a low animal density. This traffic is now widespread with Holland as the best example. In 2012, a total of 1,300 trucks, each carrying 36 m³, carried 800,000 transports in order to redistribute the slurry and provide a more even distribution of the nutrients in the slurry. Needless to say, this is a very high price to pay for reusing the nutrients in the slurry. The distance for transporting the slurry is very variable depending on region. In Germany, the transports are organised through the "Middleland channel", where a total of 4 million m³ slurry is shipped from the west to the east of Germany.

Finland and Canada have lately imposed legislation regulating use of slurry as a fertiliser according to phosphorous (P) content in the slurry. New legislation in the Netherlands requires a 25% reduction of the phosphorous content in slurry.

Animal husband slurry, or manure, usually contains 90- 95% (by weight) of water when spread using slurry tank trailers or distributed via tubes or pipes. This makes the transport very uneconomical, but it is also expensive to separate water from the slurry or to dehydrate or dry the slurry. At the end, a compromise between costs and the benefits of the relevant method and the resulting concentration of the slurry is chosen.

In many areas, biogas plants have been established in order to produce biogas and thus transforming waste streams from reusable sources, e.g. manure, waste water, sludge, etc. into energy. The gas is e.g. transformed into energy, in particular electricity by combustion of the biogas. In 2012 Germany has registered 7,000 biogas units. In order to improve the CO₂ footprint from the biogas plants, the German government sub-sidise the payment pr. kW if the biogas unit can also reuse the heat from the biogas production. This is very often a problem because the biogas plants are located well away from urban areas. A frequently used method to use the heat is to dehydrate the slurry fibre, making it much more economical to transport. Although the weight is much reduced, the dried slurry is still very voluminous. In addition, the dried slurry is still not a very good fertiliser product, because the nutrients are organically bound, it is difficult to spread evenly, and the dried slurry does not contain the optimal nutrient amounts to provide a full fertilising effect. Thus additional fertiliser will most often be required in order to ensure proper fertilising effect on the relevant fields. The dried slurry usually lack nitrogen and sulphur. On an average, the nutrients in the dry matter in the slurry will be 20% of the nitrogen (N), 80% of the phosphor (P) and 60% of the potassium (K).

The building of struvite crystals is now a well-known method of removing P from waste water and sludge.

Struvite, i.e. magnesium ammonium phosphate (MAP) or ammonium magnesium phosphate (AMP), is precipitated from solutions containing magnesium, ammonium and phosphate ions. The precipitation of struvite is usually performed in a supersaturated solution and at a slightly basic pH range, such as at pH of 7-11, in which phosphate ions are present as HPO₄²⁻, according to the general formula:

Mg²⁺ + NH₄⁺ + HPO₄²⁻ + 6H₂O → MgNH₄PO₄, 6H₂O + H⁺

Sometimes a slightly supersaturated metastable solution is built in which no precipitation occurs unless the solution is seeded with particles on which the struvite can precipitate.

Struvite precipitation is, however, mostly used as a preventive maintenance system to avoid the crystals from building spontaneously in pipes and pumps of the waste water treatment plant, e.g. a biogas production plant resulting in expensive maintenance.

An example of a biogas plant for transforming e.g. animal slurry into energy and a fertiliser fraction is disclosed in WO 2013/133703 A1. A new method for removing P from sewage water is currently emerging. The fertiliser fraction is produced by precipitating struvite, ammonium magnesium phosphate (MgNH₄PO₄). The struvite collects ammonium, which results in lowered methane production in the biogas plant, and is thus a result of optimising the gas production. The struvite is provided in a separate fraction as a fertiliser and is separated from the aqueous effluent in an upflow reactor, in which the struvite crystals settles at the bottom form which they are collected Struvite solids can be collected continuously or batch-wise. The struvite-forming step involves using an upflow reactor in which struvite solids are separated and collected from the liquid: The liquid comprising the struvite solids flows upwards; upflow velocity is controlled to make the struvite solids accumulate at the lower half of the upflow reactor, and the struvite-poor effluent is collected at the higher half of the upflow reactor. The solids collected may be re-dissolved in sulfuric acid to provide a liquid fertilizer.

Other examples of using struvite crystallisation for capturing N and P from different waste streams, e.g. sewage, waste water sludge, animal slurry, etc., are disclosed in DE3732896 A1, US 2009/0013742 A1 and WO 2006/074643 A1. Usually a fluid bed or an upflow crystallizer is used, in which struvite crystals are collected e.g. at the bottom.

In EP 1849751 A anaerobically digested sludge is subjected to struvite precipitation in a crystallization reactor for precipitating struvite from the digested sludge In addition the system comprises a removal apparatus for removing coarse contaminant particles from the digested sludge and an apparatus (a cyclone) for separating or concentrating struvite crystals from the digested sludge after the digested sludge passes through the crystallization reactor and coarse contaminant particles removal apparatus.

WO2014/003554 A discloses that thin sludge is anaerobically digested with improved phosphate removal in the form of struvite during anaerobic digestion reactor which is operated in down flow mode with crystal seeding at the top and enhanced crystal removal at the bottom. The bottom part of the reactor is provided with a rotating scraper capable of collecting solid material, i.e. struvite crystals, from the bottom of the anaerobic reactor

WO 2013/055279 A1 discloses production of struvite by precipitation, e.g. from a waste stream and dehydrating the struvite crystals, e.g. by a hydro cyclone followed by screening in particular by loading the struvite crystals into a big bag for storing of the struvite crystals which also functions as filter when dewatering the struvite crystals.

In GB 2156331A struvite is precipitated from an effluent on sheets in a container. The sheets are subsequently removed for removing the struvite crystals on the sheets. Sheets may be single use or reuseable sheets.

However, a major drawback of the struvite fertilizer product is the "slow fertilizer" effect because the struvite crystals in a struvite fertiliser needs a longer time to break down and release the nutrients, i.e. N and P, so they become available to the plants. Thus, when applied to the field during spring, the struvite based fertilisers may thus release the nutrients to late into the growth season for the crops to gain fully use of the nutrients during seedling and the early growth period, where the need for nutrients is large. Instead struvite based fertilisers may be applied to the fields during fall, but this may result in release of N and P nutrients during winter cannot be utilised by the crops and may instead cause eutrophication of the environment. Thus, at present struvite is mainly used as a fertiliser for crops having long growth seasons and/or areas having a long term needs for N and/or P nutrients, e.g. in forestry.

In this varied scenario, a new method and system is provided for improving the slurry application ability and for improving the proper application of the slurry for providing a more correct fertiliser effect of the slurry when spread on the fields. In particular it is ensured that nitrogen is bound in the slurry as ammonium-N, which has been made available through the SyreN® and the SyreN+® systems (as disclosed in EP2272315 A1, EP 2272316 A1 and EP2514294 A1). The SyreN system uses sulphuric acid to control and reduce ammonia emission from the slurry, thus resulting in an improved fertiliser effect from the slurry. By controlling the pH value around +/- pH 6, the ammonia (gas) is converted into ammonium (salt) and cannot evaporate when the slurry is spread in the fields. The sulphur in the sulphuric acid is also used as a fertiliser and it is an essential nutrient to add to the slurry. By controlling the emission of ammonia -N by acidification of the slurry, it is also possible to inject anhydrous ammonia into the slurry, which would otherwise evaporate as ammonia. The SyreN+ system adjusts the nutrients values of slurry during application through a unique and automatic process control. The use of fertilizer industry raw material (sulphuric acid and ammonia) directly into the farmer's slurry distributing equipment optimises slurry logistic, economy and reduces/eliminates negative environmental effects from slurry application. Adjusting the N and S values in relation to the ideal application rate for P, leaves the SyreN+ system able to achieve a sustainable use of organic fertilizer used as a full fertiliser which renders additional fertilising operations superfluous.

However, this does not solve the problem of redistribution of nutrients from areas with a surplus of especially P to other areas where P addition to the soil is limited. In addition the phosphorus-level in the slurry is not varied according to the need of the plants growing in the relevant field where the slurry is spread. This may lead to over fertilisation of some crops, e.g. grass, while other crops may need additional P-containing fertiliser, often conventional fertilisers, in order to ensure optimal growth, as may be the case with e.g. corn.

### Object of the Invention

Thus, it is an object of the present invention to provide a method and a system for extracting phosphorous and/or nitrogen from slurry, such as manure, sludge and/or waste water.

It is also an object of the present invention to provide a method and a system for controlling and optimising the phosphorous (P) content in a slurry on the basis of the P content in the slurry and in order to ensure that the P content in the slurry corresponds to the needs of the crops growing or to be grown at the application site.

In addition, it is an object of the present invention to reduce the emission of for example ammonia relating to application of the slurry at the application site while at the same time optimising the P content.

In addition, it is an object of the present invention to provide a method which controls and optimises the P content in a slurry in order to avoid overdosing or under-treating of with P and/or one or more other nutrients, such as Nitrogen (N), sulphur (S) and optionally potassium (K).

It is also an object of the present invention to provide a method and a system, which can reduce or eliminate the formation of struvite in e.g. biogas and/or wastewater treatment plants.

In addition it is an object of the present invention to provide a method and a system, which can use existing equipment suitable for other tasks, and thus optimize the use thereof so that a the investment by the farmer in necessary equipment is reduced.

Further it is an object of the present invention to provide a method and a system having an improved economy in relation to adjusting the phosphorous content and/or the nitrogen content of the slurry.

### Description of the Invention

These objects are met by a method for extracting at least a part of the phosphorous content of slurry, such as manure, wastewater and/or sludge, and recovering phosphorous and optionally nitrogen from the slurry by precipitating it as ammonium magnesium phosphate (NH₄MgPO₄), also known as struvite.

The method comprises the steps of transferring the slurry to a crystallisation container, and adding a magnesium salt and/or magnesium oxide (MgO) and optionally an ammonium salt in surplus in relation to the stoichiometric amount necessary for precipitating the phosphorous as ammonium magnesium phosphate (NH₄MgPO₄) to the crystallisation vessel and/or an inlet thereof. Then the ammonium magnesium phosphate (NH₄MgPO₄) precipitates on the inner surface of the vessel and/or as particles in the crystallisation container. A phosphorous reduced slurry fraction is extracted from the crystallisation container. The precipitated struvite may be extracted from the crystallisation container. Then the struvite is collected by re-dissolving the precipitate in an acidic aqueous solution or by suspending precipitated struvite in an aqueous phase.

These objects are also met by a system for extracting at least a part of the phosphorous content of a slurry and recovering at least some of the phosphorous and optionally the nitrogen content from the slurry by precipitating it as ammonium magnesium phosphate (NN₄MgPO₄). The system is special in that it comprises a crystallisation container, having means for introducing a magnesium salt and/or magnesium oxide (MgO) or an aqueous solution thereof, and optionally means for introducing an ammonium salt or an aqueous solution thereof and optionally means for introducing a pH regulating substance, into the crystallisation container and/or the inlet thereof, wherein the crystallisation container is the tank of a mobile slurry tanker.

Hereby, the struvite precipitate can be separated from a slurry which contains other particles, such as straw segments, fibres etc. and thus eliminates the need for filtering the slurry prior to struvite precipitation because it adheres to the inner walls and/or collects at the bottom of the crystallisation container. In addition, Hereby it becomes superfluous to separate the struvite precipitate from the slurry in complex process equipment such as fluid bed crystallisers or subsequent separation systems, e.g. filters, hydro cyclones or similar process equipment for separating the slurry and the precipitated struvite. This renders the process and the system according to the present invention more economical when compared to prior art systems.

Phosphorous and/or nitrogen, in particular ammonium-N and ammonia -N can be extracted from slurry sludge and/or waste water by precipitation as struvite. If the amount of phosphorous is to be reduced, struvite can be precipitated by adding one or more Mg salts, e.g. MgCl₂, MgSO₄ and/or MgO. Magnesium may also be added as a waste stream from other industries, provided that the waste stream does not contain any significant amounts of polluting or toxic compounds, e.g. heavy metals. Optionally one or more ammonium salts, e.g. NH₄Cl and/or NH₄NO₃ or anhydrous ammonia, i.e. gaseous ammonia are added, if necessary.

If the amount of nitrogen is to be reduced, e.g. prior to feeding a slurry into a biogas plant, struvite can be precipitated by addition of one or more of the Mg salts mentioned above and phosphoric acid, H₃PO₄, and/or one or more phosphate salts, e.g. Na₂HPO₄, NaH₂PO₄, K₂HPO₄, KH₂PO₄ or hydrates hereof, the potassium salts being preferred because they result in an increased level of potassium in the slurry. Then the amount of nitrogen present in the slurry can be adjusted according to the need of the plants and in relation to the relevant soil condition. The adjustment of N in the biogas slurry is performed downstream to the biogas reactor and prior to or during spreading of the slurry on the application site.

The addition of anhydrous ammonia to slurry in an amount of e.g. 0.2-1.0, in particular 0.3-0.7 kg/m³ increases pH, e.g from approximately 7 to above 8 and results in an increased amount of ammonia present in the slurry.

Ammonium-N is usually present in excess in relation to phosphate-P in solution in the liquid fraction of slurry from animal production on farms, e.g. manure from pigs. Thus the precipitation of struvite can be performed by addition of magnesium salts in excess in relation to the phosphate ion concentration. It is preferred that the molar ratio n Mg to PO₄³⁻P is equal to or above 1:1 preferably between 1:1 and up to 2.5:1, which corresponds to a weight ratio of Mg, calculated as MgCl₂, to PO₄³⁻P of 1:1 or above, preferably between 1:1 and up to 2.5:1.

The precipitation of struvite is usually performed in a supersaturated solution of magnesium, ammonium and phosphate and at a slightly alkaline pH range, such as at pH above 7, preferably of between 7 and 11 or preferably between 8 and 10 or more preferred approximately 9. Thus it may be necessary to adjust pH of the slurry before the precipitation step. It is usually necessary to raise pH slightly because the slurry contained in a slurry storage may be acidified in order to reduce ammonia evaporation from the slurry storage. Similarly other types of sludge, e.g. biogas sludge, feed for biogas plants and/or waste water may need adjustment of pH into the slight alkaline area, in order to precipitate struvite. In addition it is usually necessary to adjust pH on a continuous basis, because the precipitation of struvite binds ammonia as ammonium and thus lowers pH.

If pH is to be raised, the addition of an alkali, such as NaOH, KOH or a similar strong base or an aqueous solution thereof may be added. If the nature of the slurry or waste water is alkaline, the addition of an acid may be required. Suitable acids for adjusting pH are similar to the acids used when re-dissolving the struvite as mentioned below.

Struvite, i.e. ammonium magnesium phosphate (NH₄MgPO₄), is a crystalline salt comprising nitrogen (N) and phosphorus (P), which are essential nutrients to plants. Struvite contains approximately per kilo of crystalline struvite:
126.2 g phosphor or 387.0 g phosphate
57.1 g nitrogen or 73.5 g ammonium nitrogen and
99.0 g magnesium.

Thus struvite is suitable for use as a fertilizer providing N as well as P and is often used as a "slow release fertilizer" when applied as a solid to the application site.

The slurry subjected to precipitation is e.g. raw manure, optionally subjected to intermediate storage in a slurry storage container. During such intermediate storage, the pH of the manure may be adjusted into the acidic range, e.g. to a pH of 5-7, for reducing ammonia evaporation. In addition, untreated or treated waste water having a high content of soluble phosphorous, typically present as phosphate ions may be treated by the method. Similarly, biogas feed may be subjected to P-removal by precipitation of struvite by the method and a system according to the present invention prior to being fed into the biogas plant, for removing any dissolved phosphorous herein. Similarly, sludge drawn from anaerobic digestion in a biogas plant may be subjected to P-removal by precipitation of struvite. It is understood, that a mixture of one or more of these slurry types may be combined and subjected to P-removal by precipitation of struvite by the method and a system according to the present invention.

The precipitation of struvite can be performed in batchwise manner or in sequential batchwise manner depending on requirements in the subsequent treatment facility. If the system and the method are used on a farm for removing surplus phosphorous from the slurry produced on the farm, the struvite precipitation can be carried out in batch-wise, sequential batchwise manner as well as in continuous mode depending on the amount of slurry to be treated as well as on the nature of secondary treatment. When treating feed from for at biogas plant, it will be advantageous to conduct struvite precipitation in sequential batchwise manner, and preferably with an intermediate storage container for treated slurry, because the bioreactor continuously requires biomass as feed. Similarly biogas slurry is withdrawn from a biogas plant on a continuous basis and thus struvite precipitation is preferably also conducted on a continuous basis.

In case the slurry is animal slurry stored in a slurry storage on a farm, struvite precipitation may be run in continuous mode or preferably in batch mode or sequential batch mode, e.g. by using a mobile crystallisation container as discussed below.

In one aspect of the present invention struvite is thus precipitated from a slurry or waste water by transferring the slurry/waste water to the crystallisation container and by adding a surplus of Mg ions and optionally ammonium ions or anhydrous ammonia as described above to the crystallisation vessel and/or an inlet thereof.

The crystallisation container is closed, i.e. not open to the atmosphere, in order to avoid any ammonia or other odorous compounds escaping from the crystallisation container.

The crystallisation container preferably comprises agitation means, e.g. a propeller, a venturi mixer or similar conventional mechanical agitators and/or pneumatic agitation by means of means blowing pressurised air through the crystallisation container.

In a mobile system, the mixing may be performed by circulating the mixture through the slurry pump and the conduits of the slurry tanker. This results in that struvite precipitates on the inner surface of the vessel and/or as particles in the crystallisation container in a controlled manner. It is preferred that the agitation means directs the flow of the Mg-containing slurry towards the internal walls of the crystallisation container whereby the precipitation of struvite on the internal wall is improved.

The system preferably comprises one or more venturi nozzles in the slurry inlet to the crystallisation container. The venturi nozzle reduces the pressure in the slurry when it is pumped into the crystallisation container. This creates a slight increase in pH because the reduced pressure results in some of the CO2 still present in the slurry escape from the aqueous phase. This may induce or improve the precipitation of struvite in the crystallisation container.

The crystallisation on the internal surfaces and as particles which accumulates on the bottom of the crystallisation container results in that a controlled precipitation of struvite is obtained in the crystallisation container whereby the struvite thus obtained is collected by accumulation in the crystallisation container. A phosphorous reduced slurry fraction exits the crystallisation container through a slurry outlet. Hereby the need for subsequent separation of the precipitate from the slurry becomes superfluous or reduced significantly because the phosphorous reduced slurry leaves the crystallisation container with a significantly reduced concentration of soluble phosphorous present as phosphate ions.

The system may further comprise means for withdrawing the ammonium magnesium phosphate (HN₄MgPO₄) from the crystallisation container after introducing an aqueous composition and re-dissolving ammonium magnesium phosphate (HN₄MgPO₄) into the aqueous composition or by suspending the ammonium magnesium phosphate (HN₄MgPO₄) precipitate in an aqueous phase.

Some biogas plants and waste water treatment facilities experience problems with struvite precipitating in pipes, reactors, pumps or valves, which causes problems during and the present invention uses this in a positive way by controlling the precipitation in the crystallisation container.

In thermophilic anaerobic bioreactors, the temperature is usually between 45-55 °C. The high temperature in the bioreactor inhibit generation of struvite in the reactor itself, but as the biogas slurry is transferred from the reactor to downstream equipment, the aqueous phase and or slurry withdrawn from the biogas reactor is cooled whereby struvite precipitates in downstream process equipment, in particular heat exchangers.

Thus in a preferred embodiment, the crystallisation container comprise temperature regulation means, e.g. by providing a coil in relation to the wall, of the crystallisation container through which a coolant/heating media, e.g. water, can be circulated or in the interstice between the walls of a double walled crystallisation container.

Thereby the temperature in the crystallisation can be adjusted so that struvite precipitation is enhanced e.g. by cooling the slurry. This may result in faster struvite precipitation compared to precipitation without temperature adjusting means.

Struvite is precipitated from slurry and/or an aqueous phase from a thermophilic biogas producing anaerobic reactor by adding the magnesium source while the slurry holds the temperature of the thermophilic bio reactor. Then the slurry is transferred to the crystallisation reactor, where it is cooled whereby struvite precipitation is induced. The cooling of the Mg- containing slurry mixture can be a result of natural cooling, e.g. in case a mobile system is used, and the mobile system is placed outside and thus adapts to the surrounding temperatures. The temperature adjusting means discussed above can also be used for heating the crystallisation container, e.g. during the winter period, if necessary.

If the slurry is not a result of a thermophilic anaerobic digestion, the slurry may be heated, e.g. up to 45-55 °C, prior to entering the crystallisation container, and then subsequently cooled in the crystallisation container for enhancing precipitation of struvite in the crystallisation container. The magnesium source is preferably added while the slurry is heated as the increased temperature will increase the solubility of the magnesium source. In addition the subsequent cooling in the crystallisation container will induce formation of struvite crystals.

The heat extracted from the crystallisation container by the cooling means may be transferred to the inlet of a biogas plant by means of a heat exchanger in the biogas feed inlet, whereby the heat reused for heating the feed for the biogas reactor.

Struvite can be dissolved in an acid or an acidic aqueous solution, e.g. an acid diluted with water. The acid is preferably mineral acids like sulphuric acid, phosphoric acid, hydrochloric acid, nitric acid, boric acid, hydrofluoric acid, hydrobromic acid, hydrochloric acid, or various organic acids like formic acid, acetic acid, oxalic acid, citric acid, or lactic acid.

Thus, struvite precipitate formed in the crystallisation container is harvested or extracted by re-dissolving the struvite precipitate in an acidic aqueous solution. The amount of water and acid used for re-dissolving is preferably adjusted so that pH in the final fertiliser solution is less than 7, such as in the range of between 5.5 -6. The acidic aqueous solution is either added as an aqueous diluted solution of one or more of the acids mentioned above or water and a concentrated acid are added separately to the container. In order to be able to apply the nutrient sulphur (S) to the resulting liquid fertilizer, sulphuric acid is the preferred acid.

Thus when dissolving struvite in a sulphuric acid or an aqueous diluted sulphuric acid it becomes possible to add sulphur as well as phosphorous in the form of a liquid fertiliser and in the amounts needed by the crops growing at the application site. In order to adjust the amount of N, in relation to the P and S content of the liquid fertiliser solution obtained by dissolving struvite in the sulphuric acid/sulphuric acid solution, additional N may be added, e.g. by the addition of ammonia and/or one or more of the ammonium salts mentioned above. The solution of struvite can then be transferred to a storage means, which may be a stationary tank, an IBC container or directly into a tanker, e.g. a slurry tanker as discussed further below, which can distribute the fertiliser solution at an application site.

In yet another embodiment one or more potassium salts and/or ashes are added to the slurry in order to optimise the level of potassium (K) nutrient in the liquid fertiliser. The preferred potassium salts are e.g. KCl, K₂SO₄, K₃PO₄. Ashes arising from combustion of biomass, e.g. wood, straw, etc., are rich in potassium and can be reused by adding the ashes to the liquid fertiliser for increasing the level of potassium in the liquid fertiliser. Other sources of potassium rich ashes may also be used provided that the level of contaminants, e.g. heavy metals, is low enough to be in line with current legislation regarding content of the contaminant, e.g. heavy metals, in the resulting fertiliser composition. It is also an advantage to be able to add K separately. K has an effect as "anti-freeze agent" for winter crops and thus increases the amount of plants surviving during winter, so ideally half the amount of necessary K should be applied separately to the winter crops in the autumn and the remaining amount can be added, e.g. with slurry or a struvite (sulphuric) acid aqueous fertiliser composition in the spring.

In addtition, one or more nutrients or micro nurtients, such as Fe, Cu, Se, Mn or B etc. may be added to the liquid fertiliser.

In some situations, e.g. when pH is in the upper end of the weakly alkaline range, e.g at pH of 9-11, during precipitation of struvite, the struvite may precipitate as particles in the crystallisation container and will collect at the bottom of the crystallisation container. Thus the flow velocity may be controlled so that the flow velocity in the crystallisation container is sufficiently low for the struvite particles to precipitate, but sufficiently high for the lighter particles, e.g. fibres, etc. present in the slurry are maintained in the phosphorous reduced slurry fraction and withdrawn from the crystallisation container. In this situation, the struvite particles may be collected directly from the crystallisation container by extracting the struvite particles instead of re-dissolving the struvite in the crystallisation container. Precipitation of the struvite particles can e.g. be enhanced by inserting a lamel separator in the crystallisation container.

The struvite particles may thus be collected by suspending the struvite precipitate in the slurry or water added to the crystallisation container, and then pumping the suspension into a storage facility, such as sedimentation container where the struvite particles can separate from the aqueous phase or slurry. Alternatively, the suspended struvite precipitate can be separated from the aqueous phase or slurry by separation, e.g. in a hydrocyclone, a big-bag which may also act as a filter for collecting the struvite precipitate and or similar means for separating the struvite precipitate from the aqueous phase.

The aqueous phase may be removed, e.g. by pumping, and optionally an additional portion of the slurry of struvite particles until a certain amount of struvite is transferred to the second container. The sedimentation container may e.g. be an intermediate bulk container (IBC). Alternatively the struvite precipitate may be pumped into a big bag, which may acting as a filter bag for removing the aqueous phase and as storage for the struvite precipitate, e.g. after separation from the majority of the aqueous phase in a hydrocyclone. Thus the struvite precipitate is thus transferred directly into storage means which can be distributed to a farmer when a pre-defined amount of struvite has been transferred to the IBC-container or big bag. The struvite can then be re-dissolved in acid or a dilute acidic aqueous solution for use as a fertiliser, e.g. as concentrate for addition to slurry to be distributed on an application field or as a ready-made fertiliser as discussed above.

Alternatively, the slurry of struvite particles may be concentrated in a separation device, which separates at least some of the aqueous phase from the struvite particles, before the struvite precipitate is transferred to an IBC container, big bag or similar means for further distribution. The device is e.g. a hydro cyclone or similar means.

Phosphorus recovery may be up to 95% of soluble phosphorous present in the slurry or corresponding to up to 25-30% of the total-phosphorous content in the slurry.

In one aspect of the method and the system, the slurry is subjected to sedimentation resulting in a heavy fraction and a liquid slurry. The liquid slurry will contain a certain amount of particles suspended in aqueous phase, e.g. straw fragments fibres. The liquid slurry is the subjected to precipitation in the crystallisation container. The sedimentation is e.g. performed in an intermediate slurry storage container, such as a manure storage tank at the farm a biogas feed storage at a biogas plant or a pre-sedimentation tank at a waste water treatment facility depending on the subsequent treatment system available for processing the slurry.

Hereby the slurry will only contain a certain amount of particular matter which will not cause any major disturbance in the crystallisation container, e.g. by sedimentation of heavy slurry particles in the crystallisation container, clogging of process equipment by particulate matter from the slurry etc.

In another aspect of the system the crystallisation container is arranged on a weighing cell or a mobile crystallisation container can be moved and weighed on an existing weighing bridge, which is e.g. used for weighing waste/raw material delivered to a biogas plant, which is used as feed for the anaerobic biogas reactor. Thus the method comprises determining the amount of precipitate in crystallisation container by weighing the crystallisation container and determining the amount of water and acid necessary for re-dissolving the precipitated struvite on the basis of the weight of the precipitate.

When the weight of the crystallisation container is known, the amount of struvite precipitate present in the crystallisation container can be determined simply by weighing the crystallisation container. The weight can be determined continuously or at certain intervals. When a predefined amount of struvite precipitate is present in the crystallisation container, the amount of acidic aqueous solution or water and acid necessary for re-dissolving struvite and obtaining a fertiliser solution having a pre-defined pH, such as indicated above, can be calculated, e.g. by a control system, and subsequently added to the crystallisation container.

Hereby, a simple and yet efficient way of extracting the struvite precipitate from the crystallisation container controlling the acidic solution or alternatively the amount of acid and water added to the crystallisation container for re-dissolving, the struvite precipitate.

In one embodiment, the struvite is dissolved in concentrated sulphuric acid (i.e. containing approximately 93-96 % by weight of sulphuric acid). Dissolving struvite in sulphuric acid causes generation of heat. Therefore, in order to reduce the generation of heat, a diluted sulphuric acid, such as aqueous 50-85 % by weight sulphuric acid, preferably 70-80% by weight diluted sulphuric acid, is used for dissolving the struvite crystals. Struvite is preferably added to water and then the required amount of concentrated or diluted sulphuric acid is added for obtaining the struvite-diluted sulphuric acid composition. When diluted sulphuric acid is used, correspondingly less water is used for reducing generation of heat.

For example the struvite-sulphuric acid composition can thus be mixed directly in the crystallisation container by aiming at a fertiliser solution, which contains per m³ an amount of 275-325 kg struvite, 200-220 kg 93-96% sulphuric acid, and 680-730 kg water. If a aqueous 70-80% diluted sulphuric acid the fertiliser solution thus preferably contains 275-325 kg struvite, 670-715 kg water and 220-235 kg aqueous 70-80% diluted sulphuric acid. Thus when the volume of the crystallisation container and the weight of the struvite precipitate present in the crystallisation container is known, the necessary amounts of water and (diluted) sulphuric acid can be calculated, e.g. by the control unit, and subsequently added to the container.

The sulphuric acid-struvite composition contains at least 2 parts water, preferably 2-3 parts water, and at least 0.6 parts concentrated sulphuric acid (98% by weight sulphuric acid) per part struvite in order to ensure that struvite is fully dissolved and to avoid precipitation of MgSO₄ and/or phosphoric acid. In order to reduce generation of heat it is preferred to use an aqueous diluted sulphuric acid, e.g. a 50-85%, such as 60-80 %, preferably a 70-80 % or approx. 75% sulphuric (by weight) in water. Thus, it is preferred to provide the sulphuric acid-struvite composition by mixing one part of struvite with 1.8-2.7 parts of water and 0.78-0.91 parts of 75% by weight of sulphuric acid, preferably 2.0-2.5 parts of water and 0.82-0.88 parts of 75% by weight of sulphuric acid, or more preferred 2.3 parts of water and 0.85 parts of 75% by weight of sulphuric acid.

This solution can be diluted further prior to application, or it can be added to slurry during application on an application field.

The resulting liquid fertiliser is e.g. filled into IBC containers which can be transported and stored for later use. Alternatively, the liquid fertiliser is transferred directly to a tanker for spreading at the application field.

In yet an aspect of the invention, the system further comprises a CO2 stripper arranged upstream to the crystallisation container. Thus the method comprises degassing the slurry in a step preceding the crystallisation container. Degassing the slurry results in that carbon dioxide, CO₂, is released from the slurry, which results in an increasing pH. Thus, if the slurry is degassed performed prior to the struvite precipitation step, the amount of alkaline component, e.g. for adjusting pH into the weak alkaline range is reduced.

In yet another aspect, the system further comprises one or more PH sensors for determining the pH of the slurry. Thus the method comprises adjusting the pH in the slurry between 7 and 11, preferably between 8 and 10 or between 8.5 and 9.5

In addition, the system may optionally comprise one or more additional sensors for determining the phosphorous and/or the nitrogen content in the slurry. Hereby it becomes possible to adjust the amount of Mg component, and the amount of ammonium components on the basis of the actual content of phosphorous and optionally also nitrogen present in the slurry. Alternatively, the amounts of Mg component, and the amount of ammonium components are calculated on the basis of an average value of the P content calculated for the kind of slurry (e.g. slurry from pigs, cows etc).

The phosphorous reduced slurry fraction withdrawn from the crystallisation container is preferably returned to the storage container. Thus, any struvite particles remaining in the phosphorous reduced slurry fraction will dissolve when the slurry returns to the slurry storage.

Alternatively, struvite particles remaining in the phosphorous reduced slurry fraction may be separated therefrom in a separator, such as a hydrocyclone or a lamel separator, and the recovered precipitate is preferably recycled into to the crystallisation container. Hereby the struvite particles may act as seeding crystals for further precipitation of struvite. Alternatively the recovered precipitate is collected for later use and can be added as seeding crystals to the crystallisation container if a metastable supersaturated solution occurs, as discussed above.

It is to be understood that a single hydro cyclone can be used instead of the above mentioned two different hydrocyclones. This only requires an adaption conduits and valves for leading P-reduced slurry or precipitated struvite to the hydro cyclone respectively and for leading the separated streams to their respective downstream equipment, e.g. slurry storage for the P-reduced slurry, a big bag for the separated struvite crystals etc. respectively.

In another aspect of the invention, the crystallisation container is the tank of a mobile slurry tanker. Thus the crystallisation of struvite is performed in a mobile slurry tanker.

Hereby the farmer can use his existing equipment for precipitating struvite. The struvite is simply precipitated in the slurry tanker, and when the maximum level of struvite is reached in the slurry tanker, the farmer simply adds (sulphuric) acid and water to the slurry tank, and optionally the above mentioned additional nutrients and the content of the slurry tanker is a ready-to use- liquid fertiliser. Thus, during periods, when the slurry tanker is not used for application of slurry at the application sites, the equipment may be used for precipitating struvite from the slurry.

This invention preferably includes use of a mobile system as described in EP 2272316 A, EP 2272315 A or EP 2514294 A. The content of these published patent applications are to be understood as incorporated in this application by reference.

The mobile system is mounted on a mobile unit such as a tractor. Hereby, it can easily be moved to the field and around the field. The mobile system comprises a slurry tanker, which is intended for containing a fluid, such as slurry or water. The mobile system further comprises slurry conduits for transporting the content of the slurry tanker from the slurry tanker to the distributing means. The distributing means can for example comprise a band spreading system, an injection system or a broad spreading system for distributing the content of the slurry tanker to the application site e.g. a field. Any distributing means commonly known to the person skilled in the art for distributing for example slurry to a field can be used.

In an alternative embodiment, the mobile system is mounted on an integrated unit such as a self-propelled slurry tanker.

The liquid communication between the slurry tanker and the distributing means is in the form of conduits such as for example pipes and tubes through which the content of the slurry tanker is pumped from the slurry tanker to the distribution means.

The mobile system further comprises acid adding means for injecting/adding (sulphuric) acid composition to the content of the slurry tanker, where the means comprises a (sulphuric) acid tank, in the following also called an acid tank, (sulphuric) acid pumping, also called an acid pump, and valves in connection with the conduits.

The acid tank can be arranged at the front of the mobile unit for example attached via a three-point link as a front tank. In one embodiment, the acid tank is enclosed in an enclosure to protect the acid tank from damaging during transportation.

Alternatively, the acid tank can be arranged at the slurry tanker or as a part of the slurry tanker.

In a preferred embodiment, the slurry tanker further comprise means for adding a gaseous or liquid nitrogen-containing composition to said slurry prior to the addition of the acidic struvite composition, preferably by means of a pressure tank. The pressure tank may be arranged in connection with the slurry tanker, e.g. by being integrated into the slurry tanker.

In a further advantageous embodiment, the mobile system further comprises a control unit, where said control unit adjusts the amount of liquid nitrogen-containing composition added to said content of said slurry tanker.

In one embodiment, said control unit controls hydraulic or electric activated actuating means comprised in one or more valves.

The control unit can be coupled with the sensors measuring pH, the amount of nitrogen, phosphor and/or potassium in the content of the slurry tanker. The amount of nitrogen-containing composition added to the content of the slurry tanker and the amount of the (sulphuric) acid composition added to the slurry, after the optional addition of the N containing component, can thus, be adjusted. The adjustment can be controlled according to the amount of nitrogen, phosphor and/or potassium and/or pH in the content of the slurry tanker and an optimal ratio between the amounts of nitrogen, phosphor and/or potassium can be achieved in the content of the slurry tanker before the modified content is distributed to the field.

As an example the level of nitrogen and phosphor can be measured and additional nitrogen in the form of a nitrogen-containing component can be added to the content of the slurry tanker to adjust the level of nitrogen in the content of the slurry tanker to a level, where the crops achieve both sufficient nitrogen and sufficient phosphor when distributing the content of the slurry tanker, however, where the amount of phosphor is as low as to prevent leaching. By increasing the fertilizing value of the slurry by a mobile system as described in this application, a sustainable distribution of nitrogen, phosphor, and potassium can, thus, be obtained.

In another embodiment, the control unit is not coupled with sensors measuring nitrogen, phosphor and/or potassium, but can be controlled to add a specific amount of a liquid nitrogen-containing composition to the slurry, e.g. after manually feeding data into the controller relating to off-line determined amounts of e.g. N, P. The amount can also be pre-determined or arbitrarily chosen.

In a further advantageous embodiment, the mobile system further comprises a GPS function connected with the NIR sensor system. Hereby, the amount of phosphorous and nitrogen added to the slurry can be adjusted according to the distribution site correcting the amount depending on the type of soil. Beforehand an application map has to be created with coordinates specific for particular areas of the field. The application map can be created using techniques commonly known to the skilled person. Advantageously, this is managed through the electronic communication unit (ECU) and controlled by an operator interface system.

The control unit can be controlled either automatically or manually.

Thus the front tank or an additive tank can be used for the addition of the Mg component into the slurry tanker, e.g. during pumping into the slurry tanker via the pumping means already present on the mobile system. An additive tank can be used for storing am ammonium component or alternatively, the N addition means used in the SyreN+ system can add gaseous ammonia into the tank on the slurry tanker, which is transferred into ammonium when adjusting pH. When using ammonia as source for ammonium, in particular if MgO is used as magnesium source, it may become necessary to lower pH, which can be performed easily by addition of acid from the front tank. Similarly any acid needed for re-dissolving struvite precipitate present in the slurry tank can be added from the front tank. The pH sensors and any optional N and&or P sensors can be used for determining pH, N and/or P content of the slurry. Thus the mobile slurry distribution systems of EP 2272316 A, EP 2272315 A and/or EP 2514294 A can be retrofitted into a struvite precipitation system without any significant modification, except from an update of the control system and by providing a weighing cell optionally a degassing unit and/or a separator, e.g. a small hydrocyclone. The use of the mobile system as a crystallisation container during periods when slurry is not applied to the applications sites increases the use of the mobile system throughout the year. In addition, the phosphorous content of the slurry produced on a farm can be adjusted locally on the farm and thus be adjusted to the soil conditions on the application sites as well as to the need of the crops grown on the application sites. This may improve the farmer's overall economy, because he can produce struvite for use on certain application sites and/or for certain crops, e.g. corn, and thus eliminate or at least reduce the need for purchasing phosphorous containing fertilisers.

In addition, the slurry tanker can be used directly for fertilizing an application site with the aqueous acidic struvite composition present in the slurry tanker after re-dissolving of the struvite precipitate.

The acidic struvite composition is preferably applied prior to sowing, because the acidic nature of the composition may otherwise harm the seeds and inhibit or eliminate the germination. When the acidic struvite composition is applied prior to sowing, the soil provides significant buffer effect, which will counteract the acidic effect on the seeds.

Preferably, the acidic struvite composition is applied to the application site using RTK-GPS , i.e. Run time kinetics global positioning system, whereby the sowing can be performed correct in relation to the fertiliser applied and at superior precision, whereby the fertilising effect of the plants is optimised.

If necessary, the internal surfaces of conduits, pumps and/or valves in the system may be coated for providing a surface, which reduces or eliminates the formation of struvite crystals on the surfaces. The coating may e.g. comprise a layer of a homo- or copolymer of polymer of polypropylene (PP), polyethylene, such as high density polyethylene (HDPE), polytetrafluorethyelene (PTFE;Teflon ®) or mixtures thereof.

The mobile systems can also be slurry tankers, which are discarded due to lack of functioning of other parts than the slurry tank itself, e.g. the brake system. Thus the present invention can utilize worn out slurry tankers as struvite crystallisation containers e.g. after retrofitting and/or repairing any the malfunctioning parts in the slurry conduits and/or pumps.

Thus the present invention also relates to the use of a mobile slurry tanker as a crystallisation container in a system and method as discussed above for extracting at least a part of the phosphorous content of a slurry and recovering at least some of the phosphorous and optionally the nitrogen content from the slurry by precipitating it as struvite.

The present system and method according to the present invention can easily be adapted for precipitating any excess amounts of potassium from the slurry as potassium magnesium phosphate, KMgPO₄, also called K-struvite, which is usually precipitated as a hexahydrate: KMgPO₄, 6 H₂O. The only requirement is that pH is increased to above 11 in the slurry for precipitating K-struvite in the precipitation container.

As the presence of dissolved ammonium or ammonia may cause formation of ammonium struvite, a major amount of ammonia may be removed prior to precipitaiotn by increasing pH to above 11 and stripping of the ammonia in the CO₂ stripper. The stripped ammonia may be collected, e.g. in an acid filter or a wet scrubber. The K-struvite precipitation may recover up to 25% (by weight) of the potassium present in the slurry as K-struvite.

It should be emphasised that throughout the application the term "slurry" is to be interpreted as any kind of manure, in particular liquid manure, organic fertilizer, sludge, waste water, or similar liquids or semi-liquids in the form of a watery mixture of soluble and insoluble matter. The slurry may thus also be a feed stream for a biogas plant and/or excess slurry from a waste water treatment facility and/or a biogas plant. Throughout the application the terms "slurry", "manure" etc. are used interchangeably.

The phosphate ions are present either as H₃PO₄, H₂PO₄⁻, HPO₄²⁻ or PO₄³⁻ depending on the pH of the solution. In acidic solutions the phosphate ions are present as H₃PO₄, while PO₄³⁻ ion is dominating in strong alkaline solutions. In weak acidic solutions, the phosphate ions are present as H₂PO₄⁻ and in weak alkaline the phosphate ions are present as HPO₄²⁻. Throughout the present application, the term "phosphate ion" will cover these ions phosphorous ions present in the solution at the relevant pH. In addition the concentration or amounts of phosphorous ions will be calculated as mol/l PO₄³⁻ -P or mg/l PO₄³⁻ -P or g or kg PO₄³⁻ -P respectively.

Furthermore, it should be emphasised that throughout the application the term "application site" is to be interpreted as any kind of field, ground or the like, wherein the fertilizing and/or nutritive qualities of the slurry is utilized, e.g. by plants growing in the field.

### Description of the Drawing

The present invention will be described with reference to the drawing in which
- Fig. 1: shows a diagram of a stationary system for precipitating struvite from a slurry in according to the present invention,
- Fig. 2: shows a diagram of an alternative system for precipitating struvite from a slurry in a mobile unit according to the present invention,
- Fig. 3: shows an example of a mobile unit used for precipitating struvite according to the present invention as disclosed in 2272316 A or EP 2272315 A, and
- Fig. 4: shows shows an example of a mobile unit used for precipitating struvite according to the present invention as disclosed in EP 2514294 A.

### Detailed Description of the Invention

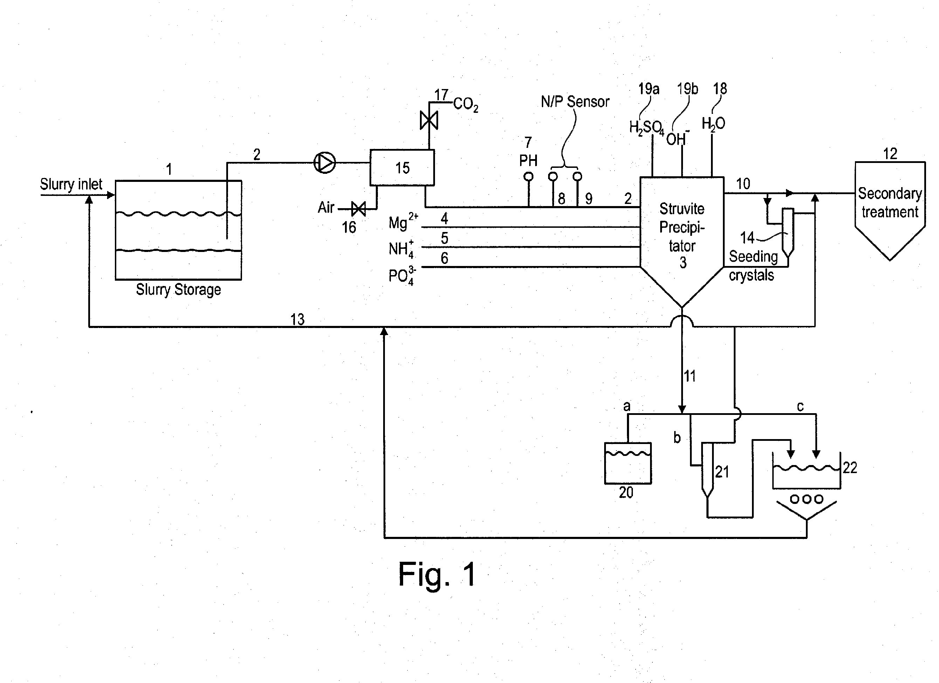

In fig 1 a stationary system a stationary system according to the present invention is shown.

Slurry is stored in a slurry storage container 1 after being pumped into the slurry storage 1 from a slurry inlet A. Slurry is usually agitated in a slurry storage 1 in conventional systems. In the method and system according to the present invention, such agitated slurry can be used directly for precipitating struvite, or the slurry may be separated into a dense fraction and a liquid slurry by sedimentation, e.g. because the slurry is left without agitation for a period of time, the time depending on the nature of the slurry, whereby the slurry separates into the dense fraction (containing a significant amount of the particular matter of the slurry) and a liquid fraction containing less particular matter. The liquid fraction is pumped from the slurry storage 1, via slurry pipe or tube connection 2 to a crystallisation container 3 and can then be subjected to struvite precipitation.

The crystallisation container is provided with means 4 for adding Mg salts, e.g. MgCl₂, MgSO₄ and/or MgO and means 5 for adding one or more ammonium salts, e.g. NH₄Cl and/or NH₄NO₃ or anhydrous ammonia 28 and optionally means 6 for addition of a phosphate ion containing compound, e.g. phosphoric acid, H₃PO₄, and/or one or more phosphate salts, e.g. Na₂HPO₄, NaH₂PO₄, K₂HPO₄, KH₂PO₄ or hydrates hereof. In addition the crystallisation container 3 comprise means 19a, 19b, for the addition of an acid 19a , e.g. sulphuric acid, and/or a base 19b, e.g. sodium hydroxide for controlling pH of the slurry in the crystallisation container 3.

Alternatively, the addition of chemicals are arranged at the slurry inlet to the crystallisation container 3.

For example the liquid fraction of pig slurry contains, in average, 1.9-6.1 kg NH₄/m³-, 2.8-7.5 kg K /m³ and 0.1-2.2 kg PO₄/m³. It is preferred that the molar ratio Mg to PO₄³⁻P is equal to or above 1:1 preferably between 1:1 and up to 2.5:1, which corresponds to a weight ratio of Mg, calculated as MgCl₂, to PO₄³⁻P of 1:1 or above, preferably between 1:1 and up to 2.5:1. Thus, in order to precipitate the dissolved phosphor present in the slurry as struvite an amount of Mg²⁺, calculated as MgCl₂, corresponding to 0.1-5.5 kg /m³ is required, or preferably 0.1-3.0 kg /m³.

The crystallisation container 3 preferably comprises agitation means (not shown), e.g. a propeller, a venturi mixer or similar conventional mechanical agitators and/or pneumatical agitation by means of means blowing pressurised air through the crystallisation container. In the mobile system, the mixing may be performed by circulating the mixture through the slurry pump and the conduits of s slurry tanker.

One or more pH sensors 7, and optionally additional sensors 8,9, such as sensors for detecting P and/or N present in the slurry, are arranged in the slurry pipe/tube connection 2 and/or in the crystallisation container 3. The sensors 7,8,9 provide a controller (not shown) with information regarding pH and optionally the composition in terms of N and/or P content of the slurry for controlling the addition of base/acid Mg ²⁺, NH₄⁺ ions and optionally phosphate ions prior to precipitation.

Slurry usually contains significant amounts of dissolved CO₂. This lowers pH of the slurry and buffers the slurry. In order to save some addition of base, such as NaOH, it may be advantageous to install a CO2 stripper 15 in the slurry connection conduit 2 in which carbon dioxide, CO₂, is stripped from the slurry before it is transferred to the crystallisation unit 3, e.g. by means of air blowing means 16 for blowing air into the slurry in the CO2 stripper 15. Air and CO₂ escapes through an air outlet 17. Hereby pH of the slurry can be increased, and the amount of basic chemicals, e.g. NaOH, added for raising PH of the slurry prior to struvite precipitation can be reduced.

In the crystallisation unit 3, a supersaturated solution is built, i.e. the amount of magnesium, ammonium and phosphate ions are above stoichiometric amount necessary for precipitating the phosphorous as struvite, i.e. ammonium magnesium phosphate (NH₄MgPO₄), typically as a hexahydrate thereof.

Thereby precipitation of struvite is confined to the crystallisation container 3, and a layer of struvite precipitate is built on the internal surfaces of the crystallisation container 3, and/or a layer of precipitated struvite particles is built on the bottom of the crystallisation container 3. When the slurry is transferred, e.g. to further treatment, it will contain less phosphate as well as ammonium ions, whereby any subsequent precipitation of struvite, e.g. in pipes or pumps of a biogas plant, is reduced significantly or even eliminated.

Treated slurry exits the crystallisation container 3 via a slurry outlet 10 from which it is transferred to further treatment 12, e.g. in a biogas plant, or it may be recirculated to the slurry storage 1 via a recirculation conduit 13.

If necessary, any remaining particles of struvite present in the slurry outlet 10 stream may be separated from the slurry in a hydrocyclone 14. The particles separated from the treated slurry may be injected into the crystallisation container 3 as seeding crystals.

The crystallisation container is preferably mounted on a weighing cell (not shown) which is connected to the control unit (also not shown), so that the overall weight of the crystallisation container 3 can be determined. The pipe connections connected to the crystallisation container 3 thus preferably contains a flexible area so that the crystallisation container 3 is able move together with the weighing cell. Alternatively, an existing weighing bridge, can be used for determining the weight of a mobile crystallisation container, simply by placing the mobile crystallisation container, e.g. the slurry tanker, as discussed below, on the weighing bridge.

The amount of struvite, which has precipitated is thus determined continuously or intermittently on the basis of the overall weight of the crystallisation container, preferably when all liquid has been drained from the crystallisation container 3. As the weight of the empty crystallisation container 3 is known, the amount of struvite precipitate present in can be calculated, preferably by the control unit.

When the weight of the crystallisation container is known, the amount of struvite precipitate present in the crystallisation container can be determined simply by weighing the crystallisation container. The weight can be determined continuously or at certain intervals. When a predefined amount of struvite precipitate is present in the crystallisation container, the amount of acidic aqueous solution or water and acid necessary for re-dissolving struvite and obtaining a fertiliser solution having a pre-defined pH, such as indicated above, can be calculated, e.g. by a control system, and subsequently added to the crystallisation container.

For example the struvite-sulphuric acid composition can thus be mixed directly in the crystallisation container 3 by aiming at a fertiliser solution, which contains per m³ an amount of 275-325 kg struvite, 200-220 kg 93-96% sulphuric acid, and 680-730 kg water. If a aqueous 70-80 % diluted sulphuric acid the fertiliser solution thus preferably contains 275-325 kg struvite, 670-715 kg water and 220-235 kg aqueous 70-80% diluted sulphuric acid. Thus when the volume of the crystallisation container and the weight of the struvite precipitate present in the crystallisation container 3 is known, the necessary amounts of water and (diluted) sulphuric acid can be calculated, e.g. by the control unit, and subsequently added to the crystallisation container 3. The resulting fertiliser solution can be transferred to one or more storage containers 20 through the struvite outlet 11. The containers 20 may be e.g. a tank trailer or an IBC for transporting the fertiliser solution or it may be transferred to one or more stationary containers for intermediate storage.

In some situations, e.g. when pH is in the upper end of the weakly alkaline range, e.g at pH of 9-11, during precipitation of struvite, the struvite may precipitate as particles in the crystallisation container 3 and will collect at the bottom of the crystallisation container 3. Thus the flow velocity may be controlled so that the flow velocity in the crystallisation container 3 is sufficiently low for the struvite particles to precipitate, but sufficiently high for the lighter particles, e.g. fibres, etc. present in the slurry are maintained in the phosphorous reduced slurry fraction and withdrawn from the crystallisation container through the outlet 10. In this situation, the struvite particles may be collected directly from the crystallisation container by extracting the struvite particles instead of re-dissolving the struvite in the crystallisation container. Precipitation of the struvite particles can e.g. be enhanced by inserting a lamella separator (not shown) in the crystallisation container 3.

The struvite particles may thus be collected by suspending the struvite precipitate in the slurry or preferably in water added to the crystallisation container 3, and then pumping the suspension from the crystallisation container 3 via a struvite outlet 11 into a storage facility, such as sedimentation container where the struvite particles can separate from the aqueous phase or slurry. Alternatively, the suspended struvite precipitate can be separated from the aqueous phase or slurry by separation, e.g. in a hydrocyclone, a big-bag which may also act as a filter for collecting the struvite precipitate and or similar means for separating the struvite precipitate from the aqueous phase.

The aqueous phase may be removed, e.g. by pumping, and optionally an additional portion of the slurry of struvite particles until a certain amount of struvite is transferred to the second container 20. The sedimentation container may e.g. be an intermediate bulk container (IBC), a tank trailer or a stationary container as discussed above. Alternatively the struvite precipitate may be pumped into a big bag 22, which also acts as a filter bag for removing the aqueous phase and as storage for the struvite precipitate, e.g. after separation from the majority of the aqueous phase in a hydrocyclone 21. Thus the struvite precipitate can thus be transferred directly into storage means 20, 21 which can be distributed to a farmer when a pre-defined amount of struvite has been transferred to the IBC-container or tank trailer 20 or big bag 22. The struvite can then be re-dissolved in acid or a dilute acidic aqueous solution for use as a fertiliser, e.g. as concentrate for addition to slurry to be distributed on an application field or as a ready-made fertiliser as already discussed above.

Alternatively, the slurry of struvite particles may be concentrated in a separation device 21, which separates at least some of the aqueous phase from the struvite particles, before the struvite precipitate is transferred to an IBC container tank trailer 20, big bag 22 or similar means for further distribution. The device 21 is e.g. a hydrocyclone or similar means.

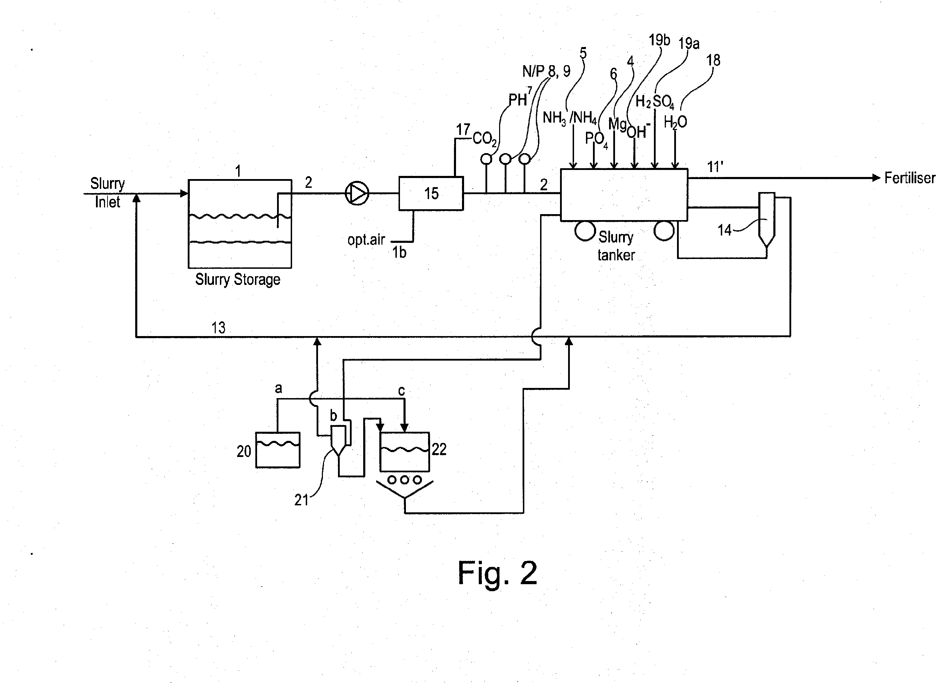

Fig. 2 discloses a similar system in which the crystallisation container 3 is the tank 3' of a mobile unit. The remaining components already discussed in relation to fig. 1 will preferably also be present. This system is particularly useful on a farm, where the farmer is in possession of a mobile tank trailer, e.g. a slurry tanker, which is easily retrofitted into acting as a crystallisation container 3.

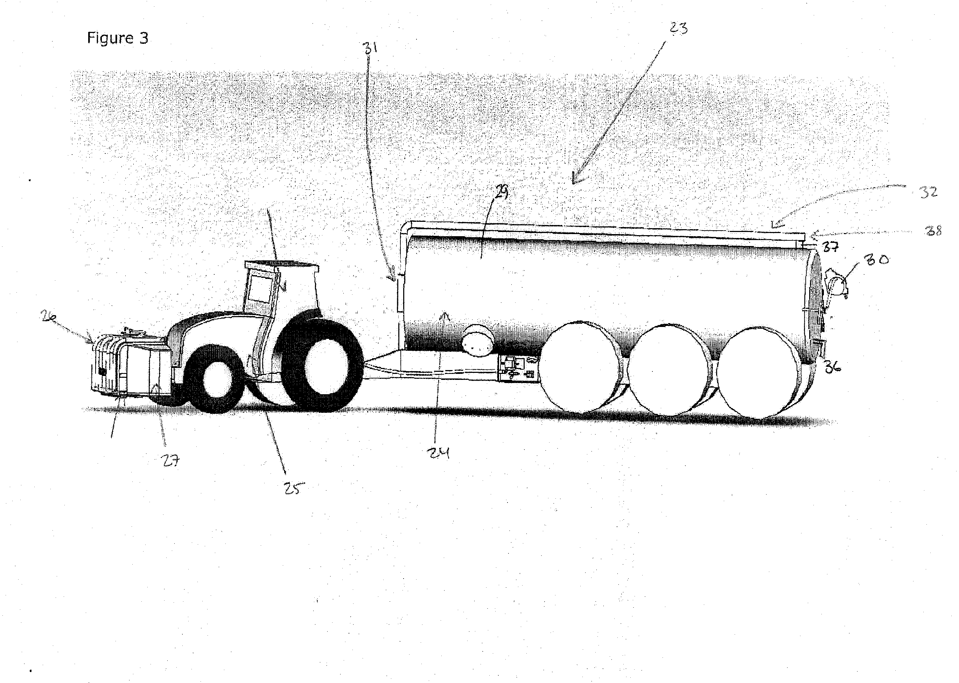

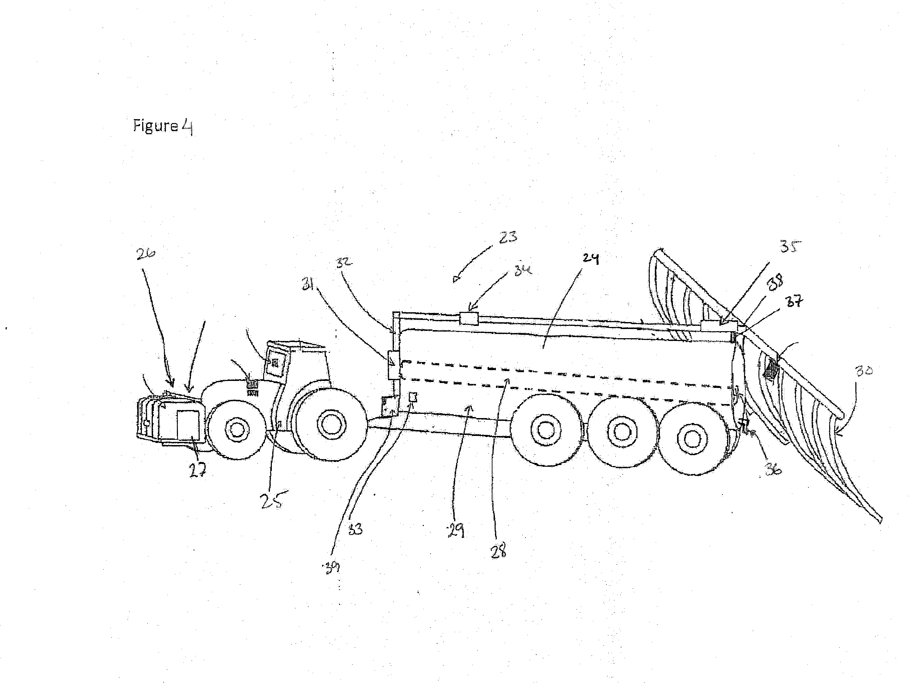

Such suitable systems are disclosed in figs 3 and fig. 4, which disclose a system according to EP2272315 A1/EP 2272316 A1 and EP2514294 A1 respectively.

The mobile system is mounted on a mobile unit such as a tractor 25. Hereby, it can easily be moved to the field and around the field. The mobile system comprises a slurry tanker 24, which is intended for containing a fluid, such as slurry or water. The mobile system further comprises slurry conduits 32 for transporting the content of the slurry tanker from the slurry tanker to the distributing means 30. The distributing means can 30 for example comprise a band spreading system, an injection system or a broad spreading system for distributing the content of the slurry tanker to the application site e.g. a field. Any distributing means commonly known to the person skilled in the art for distributing for example slurry to a field can be used.

In an alternative embodiment, the mobile system is mounted on an integrated unit such as a self-propelled slurry tanker.

The liquid communication between the slurry tanker and the distributing means is in the form of conduits 32 such as for example pipes and tubes through which the content of the slurry tanker is pumped from the slurry tanker to the distribution means 30.

The mobile system further comprises acid adding means for injecting/adding (sulphuric) acid composition to the content of the slurry tanker, where the means comprises a (sulphuric) acid tank 26, in the following also called an acid tank, (sulphuric) acid pumping, also called an acid pump, and valves in connection with the conduits 32.

The acid tank can be arranged at the front of the mobile unit In one embodiment, the acid tank is enclosed in an enclosure to protect the acid tank 26 from damaging during transportation.

Alternatively, the acid tank can be arranged at the slurry tanker or as a part of the slurry tanker.

In a preferred embodiment, the slurry tanker further comprise means for adding a gaseous or liquid nitrogen-containing composition to the content of the tank 29, preferably by means of a pressure tank 29. The pressure tank 28 may be arranged in connection with the slurry tanker, e.g. by being integrated into the tank 29 of the slurry tanker 24.

In a further advantageous embodiment, the mobile system further comprises a control unit 40 (shown on fig. 4), where said control unit 40 adjusts the amount of acid and/or liquid nitrogen-containing composition added to said content of said tank 29.

The control unit can be coupled with the sensors measuring pH 33, 34 the amount of nitrogen, phosphor and/or potassium 35 in the tank content or the slurry prior to entering the distributor 30. The amount of nitrogen-containing composition added to the content of the slurry tanker and the amount of the (sulphuric) acid composition added to the slurry, after the optional addition of the N containing component, can thus, be adjusted.

As an example the level of nitrogen and phosphor can be measured and additional nitrogen in the form of a nitrogen-containing component can be added to the content of the slurry tanker to adjust the level of nitrogen in the content of the slurry tanker to a level, where the crops achieve both sufficient nitrogen and sufficient phosphor when distributing the content of the slurry tanker, however, where the amount of phosphor is as low as to prevent leaching.

In another embodiment, the control unit 40 is not coupled with sensors measuring nitrogen, phosphor and/or potassium, but can be controlled to add a specific amount of a liquid nitrogen-containing composition to the slurry, e.g. after manually feeding data into the controller relating to off-line determined amounts of e.g. N, P. The amount can also be pre-determined or arbitrarily chosen.

The control unit can be controlled either automatically or manually.

When used for precipitating struvite, the slurry tanker 23 is connected to the slurry storage via conduits 2, and an optional CO2 stripper 15, as discussed above.

The front tank 26 can be used for addition of sulphuric acid to the tank, and one or more additive tanks 27 can be used for the addition of the Mg component into the slurry tanker, e.g during pumping into the tank 24 via the pumping means already present on the mobile system. An additive tank 27 can also be used for storing am ammonium component or alternatively, the N addition means used in the SyreN+ system can add gaseous ammonia into the tank 24 on the slurry tanker 23, which is transferred into ammonium when adjusting pH. When using ammonia as source for ammonium, in particular if MgO is used as magnesium source, it may become necessary to lower pH, which can be performed easily by addition of acid from the front tank 26. Similarly any acid needed for re-dissolving struvite precipitate present in the slurry tank can be added from the front tank 26. The pH sensors, 33, 35 and any optional N and/or P sensors 35 can be used for determining pH, N and/or P content of the slurry prior to entering the tank 24 of the slurry tanker 23. The conduit 32 on the slurry tanker may thus contain means for pumping slurry into the tank 24 in reversed direction compared to when spreading slurry. This may require that the pumping means 39 on the slurry tanker is reversible, or alternatively that the pump 39 on the slurry tanker 23 is bypassed and a separate pumping means (not shown) is used. The slurry tanker may contain a separate outlet 36 for extracting the struvite fertiliser solution and optionally a conduit connection 37 for recirculating any content in the conduits 32 into the tank 24.

Thus the mobile slurry distribution systems of EP 2272316 A, EP 2272315 A and/or EP 2514294 A can be retrofitted into a struvite precipitation system without any significant modification, except from an update of the control system and by providing a weighing cell or an existing weighing bridge, optionally a degassing unit and/or a separator, e.g. a small hydrocyclone.

As mentioned above, the present system and method according to the present invention can easily be adapted for precipitating any excess amounts of potassium from the slurry as potassium magnesium phosphate, KMgPO₄, also called K-struvite, which is usually precipitated as a hexahydrate: KMgPO₄, 6 H₂O. The only requirement is that pH is at least 10.5, preferably at least 11 in the slurry when precipitating K-struvite in the precipitation container 3.

As the presence of dissolved ammonium or ammonia may cause formation of ammonium struvite instead or in addition to K-struvite, a significant amount of ammonia may be removed from the slurry prior to precipitaiotn by increasing pH to above 11 and stripping of the ammonia in the CO₂ stripper 15. The stripped ammonia may be collected, e.g. in an acid filter or a wet scrubber (not shown). The K-struvite precipitation may recover up to 25% (by weight) of the potassium present in the slurry as K-struvite.

The cooling means (not shown) in the crystallisation container can provide any cooling or heating necessary for providing optimal precipitation conditions for formation of K-struvite.

## Claims

1. Method for extracting at least a part of the phosphorous content of a slurry, such as manure, wastewater and/or sludge, and recovering phosphorous and optionally nitrogen from the slurry by precipitating it as ammonium magnesium phosphate (NH₄MgPO₄), comprising the steps of
• transferring the slurry to a crystallisation container,
• adding a magnesium source, such as a magnesium salt, e.g. MgCl₂, MgSO₄ and/or magnesium oxide (MgO) and optionally an ammonium source, such as NH₄Cl and/or NH₄NO₃ or anhydrous ammonia, in surplus in relation to the stoichiometric amount necessary for precipitating the phosphorous as ammonium magnesium phosphate (NH₄MgPO₄) to the crystallisation vessel and/or an inlet thereof,
• precipitating the ammonium magnesium phosphate (N₄HMgPO₄), on the inner surface of the vessel and/or as particles in the crystallisation container,
• extracting a phosphorous reduced slurry fraction and
• collecting the struvite precipitate by extracting the precipitated ammonium magnesium phosphate from the crystallisation container by re-dissolving the precipitate in an acidic aqueous solution or by suspending precipitated struvite in an aqueous phase.

2. Method according to claim 1, comprising determining the amount of precipitate in the crystallisation container by weighing the crystallisation container and determining the amount of water and acid necessary for re-dissolving the precipitated ammonium magnesium phosphate on the basis of the weight of the precipitate.

3. Method according to claim 1 or 2, comprising cooling the slurry in the crystallisation container and optionally adjusting the temperature of the slurry to about 45-55°C prior to addition of the magnesium source.

4. Method according to any of the claims 1-3, comprising degassing the slurry in a step preceding the crystallisation container.

5. Method according to any of the claims 1-4, comprising adjusting the pH in the slurry to above 7, preferably between 7 and 11 or more preferred between 8 and 10 or in particular approximately 9.

6. Method according to any of the claims 1-5, comprising recovering any ammonium magnesium phosphate particles remaining in the phosphorous reduced slurry fraction in a separator, such as a hydrocyclone or a lamella separator and recycling the recovered precipitate to the crystallisation container.

7. Method according to any of the claims 1-6, wherein the crystallisation container is a mobile slurry tanker.

8. Method according to any of the claims 1-7, wherein the slurry is separated subjected to sedimentation resulting in a heavy fraction and an aqueous fraction, and subjecting the aqueous fraction to precipitation in the crystallisation container.

9. System for extracting at least a part of the phosphorous content of a slurry and recovering at least some of the phosphorous and optionally the nitrogen content from the slurry by precipitating it as ammonium magnesium phosphate (NH₄MgPO₄), wherein the system comprises a crystallisation container, having means for introducing a magnesium salt and/or magnesium oxide (MgO) or an aqueous solution thereof, and optionally means for introducing an ammonium salt or an aqueous solution thereof and optionally means for introducing a pH regulating substance, into the crystallisation container and/or the inlet thereof, wherein the crystallisation container is the tank of a mobile slurry tanker.

10. System according to claim 9, wherein a heat exchanger coil is arranged in connection to the wall of the crystallisation container.

11. System according to claim 9 or 10, wherein the crystallisation container is arranged on a weighing cell.

12. System according to any of claims 9-11, wherein the crystallisation container comprises baffle plates, and/or wall elements for increasing overall area of the internal walls.

13. System according to any of claims 9-12 wherein the crystallisation container further comprises means for withdrawing the ammonium magnesium phosphate (NH₄MgPO₄) from the crystallisation container after introducing an aqueous composition and re-dissolving ammonium magnesium phosphate (NH₄MgPO₄) into the aqueous composition or by suspending the ammonium magnesium phosphate (NH₄MgPO₄) precipitate in an aqueous phase.

14. System according to any of claims 9-13, which further comprises a CO2 stripper arranged upstream to the crystallisation container.

15. System according to any of claims 9-14, which further comprises a separator, such as a hydrocyclone or a lamella separator arranged in communication with an outlet of the crystallisation container for separating any ammonium magnesium phosphate particles escaping the crystallisation container through the liquid outlet of the crystallisation container and/or for separating suspended ammonium magnesium phosphate particles from the aqueous suspension.

16. Use of a mobile slurry tanker as a crystallisation container in a system for extracting at least a part of the phosphorous content of a slurry and recovering at least some of the phosphorous and optionally the nitrogen content from the slurry by precipitating it as ammonium magnesium phosphate (NH₄MgPO₄) according to any of claims 9-15 or in a method according to any of claim 1-8.
